# EUROPEAN PATENT APPLICATION

(11) **EP 2 357 689 A1**
(43) Date of publication of application: **17.08.2011**
(21) Application number: 11001314.1
(22) Date of filing: 16.02.2011
(51) Int. Cl.: H01M 2/10, H01M 6/46, H01M 10/50

(54) **Battery module**

(30) Priority: 17.02.2010 JP 2010032051
(71) Applicant: Sanyo Electric Co., Ltd., Osaka 570-8677 (JP)
(72) Inventor: Kurosawa, Yoshiaki, Osaka 570-8677 (JP)
(74) Representative: Glawe, Delfs, Moll

(57) **Abstract**

A battery module(1, 1A, 1B) comprising: at least one assembled battery (11, 101)that has a cooling face (11A, 101A) and comprises an assemble of a plurality of electric cells (10)and separators (20, 40)each of which has an insulating property and is interposed between adjacent electric cells of the plurality of electric cells; a cooling plate (12, 12a) through which refrigerant is made to flow, the coolingplate being disposed in contact with the assembled battery; a press device (15, 32)that is disposed to press the assembled battery from an opposite surface side of the assembled battery to the cooling face (11A, 101A) so that the cooling plate is brought into contact with the cooling face under pressure.

## Description

### 1. Field of the Invention

The present invention relates to a battery module constructed by arranging and assembling plural electric cells such as square (polygonal) electric cells or the like, for example.

### 2. Description of the Related Art

There is known a batterymodule in which plural electric cells are arranged and assembled to form an assembledbattery, a cooling plate is disposed on a cooling face provided to one end face of the assemble battery, and refrigerant is made to flow through the inside of the cooling plate to cool the assembled battery.

This type of battery module is frequently mounted in a vehicle or the like and used for running. Therefore, the battery module suffers vibration under a vehicle running state, and thus it is required to mount the assembled battery on the cooling plate while applying moderate holding force to the cooling plate. Therefore, in order to surely bring the cooling plate into contact with the assembled battery even when it suffers vibration or the like under the vehicle running state, the cooling plate is urged against the assembled battery side by a leaf spring or the like to mount the cooling plate on the assembled battery (for example, see JP-A-2008-181734).

The cooling plate cools the battery module by forming ametal thin plate having high thermal conductivity and masking refrigerant flow through the inside of the metal thin plate. The cooling plate is deformed due to temperature variation, and thus it is required to release the distortion thereof. Accordingly, it is impossible to mount a fixing member to the cooling plate so that the whole one surface of the cooling plate is covered by the fixing member. Therefore, when the cooling plate is urged against the assembled battery by an elastic member such as a leaf spring or the like, the leaf spring is disposed at one place or plural places of the cooling plate to hold the cooling plate.

However, with respect to the cooling plate which is formed like a thin plate, when external force is applied to the cooling plate under the state that the cooling plate is fixed to the battery module, it is expected that stress locally concentrates on a portion to which urging force is applied and thus the coolingplate is deformed. Furthermore, it is known that the electric cell is deteriorated and also deformed under a normal use environment. As described above, when the cooling plate or the electric cell is deformed, the cooling plate cannot be brought into uniform contact with the cooling face of the assembled battery, and the thermal resistance between the cooling plate and the cooling face is increased. Therefore, the battery module can be cooling efficiently.

### SUMMARY OF THE INVENTION

The present invention has been implemented in view of the foregoing situation, and has an object to provide a battery module that can cool efficiently.

In order to attain the above object, according to the present invention, there is provided a battery module(1, 1A, 1B) comprising: at least one assembled battery (11, 101)that has a cooling face (11A, 101A) and comprises an assemble of a plurality of electric cells (10) and separators (20, 40)each of which has an insulating property and is interposed between adjacent electric cells of the plurality of electric cells; a cooling plate (12, 12a)through which refrigerant is made to flow, the cooling plate being disposed in contact with the assembled battery; a press device (15, 32) that is disposed to press the assembled battery from an opposite surface side of the assembled battery to the cooling face (11A, 101A) so that the cooling plate is brought into contact with the cooling face under pressure.

In the above battery module, the press device presses each cell of the plural electric cells individually.

In the above battery module, the press device has a plurality of leaf springs (17).

In the above battery module, each of the separators has an upper-surface holding portion (21, 41) for holding the upper surface of each of the electric cell, a side-surface holding portion (24, 25, 44, 45) for holding a pair of side surfaces of the electric cell, a lower-surface holding portion (22, 42) for holding the lower surface of the electric cell, and an insulating portion (23, 43) interposed between the adjacent electric cells, and the holding portion located at the cooling face is cut out to form a cut-out portion (27, 47) so that a pair of corner portions are left and the cooling face of the electric cell is exposed through the cut-out portion.

The above battery module further comprising a thermal conductive sheet (14) having an insulating property and thermal conductivity that is disposed in contact with the cooling face of each electric cell and the cooling plate.

In the above battery module, the cooling plate is pinched from both the sides thereof by the assembled battery through the thermal conductive sheet.

According to the present invention, the plural electric cells are assembled while the separators having the insulating property are interposed between the adjacent electric cells, thereby forming the assembled battery, the cooling plate through which refrigerant is made to flow is brought into contact with the cooling face of the assembled battery, and the assembled battery is pressed from the opposite surface side to the cooling face by the press device to bring the cooling face into contact with the cooling plate. Therefore, even when the cooling plate or the electric cell is deformed, the cooling face of the assembled battery can be pressed against the cooling plate, and thus the cooling face of the assembled battery can be brought into uniform contact with the cooling plate. Furthermore, the assembled battery is urged to the cooling plate by the press device without urging the cooling plate, and thus the deformation of the cooling plate can be reduced. Therefore, the thermal resistance between the cooling face of the assembled battery and the cooling plate can be reduced, the heat conductivity is enhanced, and the batterymodule canbe efficiently cooled.

### BRIEF DESCRIPTION OF THE DRAWINGS

Fig. 1 is a perspective view showing an assembled battery according to an embodiment;
Fig. 2 is an explodedperspective view showing a battery module;
Fig. 3 is a perspective view showing a separator;
Fig. 4 is an exploded perspective view showing an assembly state of a battery module;
Fig. 5 is a perspective view showing a press device;
Fig. 6 is a top view of the battery module;
Fig. 7 is an exploded perspective view of a battery module according to a second embodiment;
Fig. 8 is an explodedperspective view showing a battery module according to a third embodiment;
Fig. 9 is a perspective view showing the press device; and
Fig. 10 is a perspective view showing a separator.

### DETAILED DESCRIPTION OF PREFERRED EMBODIMENT

An embodiment according to the present invention will be hereunder described with reference to the drawings.

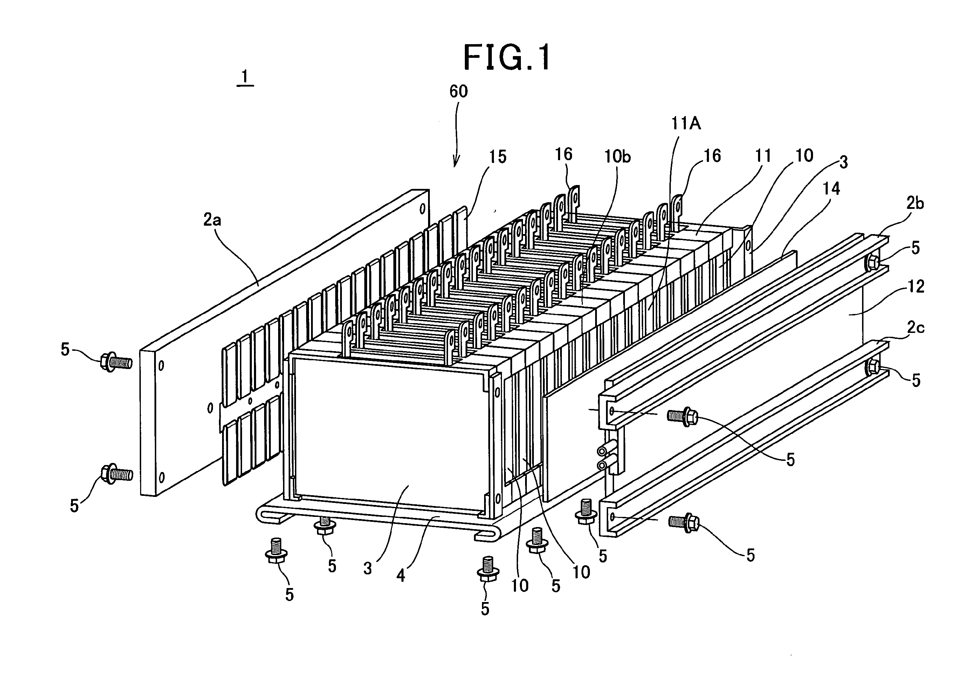

Fig. 1 shows a battery module 1 according to an embodiment. The battery module 1 is an in-vehicle mount battery module to be mounted in a hybrid vehicle or an electrical vehicle which uses an electric motor as a driving source. The batter module 1 has a module case 60 formed like a substantially rectangular parallelepiped frame, and the module case 60 contains an assembled battery 11 constructed by arranging and assembling plural electric cells 10, a cooling plate 12 which is disposed along one side surface (cooling face) of both side surfaces at the right and left sides of the assembled battery 11 with respect to the arrangement direction of the electric cells 10 to cool the assembled battery 11, a thermal conductive sheet 14 interposedbetween the assembledbattery 11 and the cooling plate 12, and a press device 15 which is disposed along the opposite side surface to the cooling face 11A and urges the assembled battery 11 against the cooling plate 12. A flat perforated pipe type (micro-channel type)plate (not shown) may be suitably used as the cooing plate 12, and both the surfaces of the cooling plate 12 are formed as heat-exchange faces.

The module case 60 of the battery module 1 has a side block 2a which is disposed at the outside of the, press device 15 substantially in parallel to the press device 15 and is formed like a plate to be slightly higher and longer in the arrangement direction than the assembled battery 11, and a pair of side blocks 2b and 2c having substantially U-shaped section which is formed to have substantially the same length as the side block 2a. Furthermore, end blocks 3 are arranged at the front and rear sides of the assembled battery 11 with respect to the arrangement direction of the electric cells 10. The side blocks 2a, 2b, 2c are threadably fixed to the side surfaces of the end blocks 3 by bolts 5. The module case 60 has a bottom plate 4 on which the assembled battery 11 is mounted and disposed, and the bottom plate 4 is threadably fixed to the side blocks 2a and 2c from the lower side by plural bolts 5.

As not shown, each of the electric cells 10 is constructed by accommodating a nonaqueous electrolytic secondary cell containing an electric power generating element around which a positive electrode and a negative electrode are wound through a separator in a square (or polygonal) flat plate type case 10c formed of aluminum or aluminum alloy. A lithium ion secondary cell or the like is suitably used as the nonaqueous electrolytic secondary cell, for example.

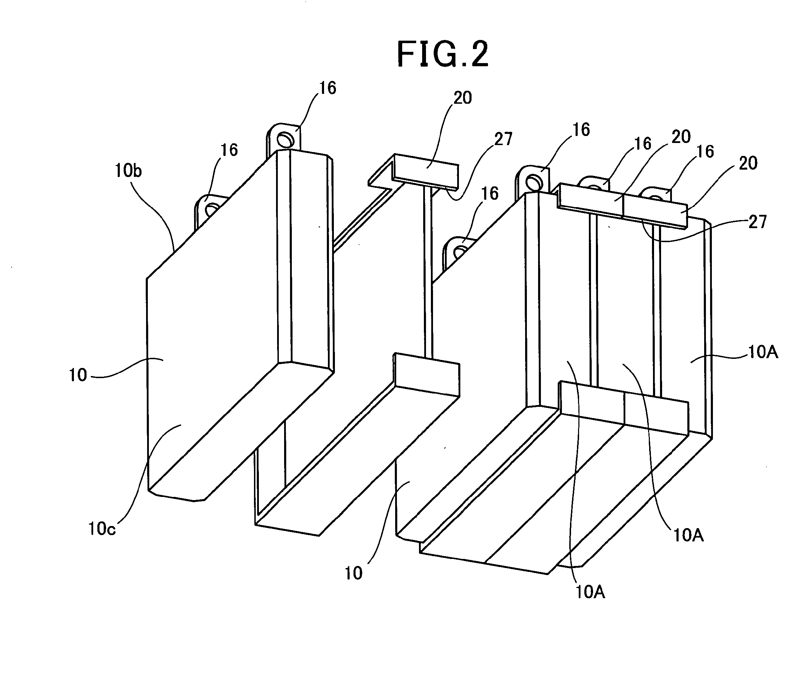

As shown in Fig. 2, a pair of output terminals 16 are provided to the upper surface 10b of each electric cell 10 so as to project from the case 10c. The assembled battery 11 is constructed by arranging a plurality of square (or polygonal) flat plate type electric cells 10 in a short-side width direction of the electric cells 10c, sandwiching separators 20 between the respective adjacent electric cells 10 and assembling these electric cells 10. In the following description, the side surfaces are defined as faces provided at the right and left sides with respect to the arrangement direction of the electric cells 10.

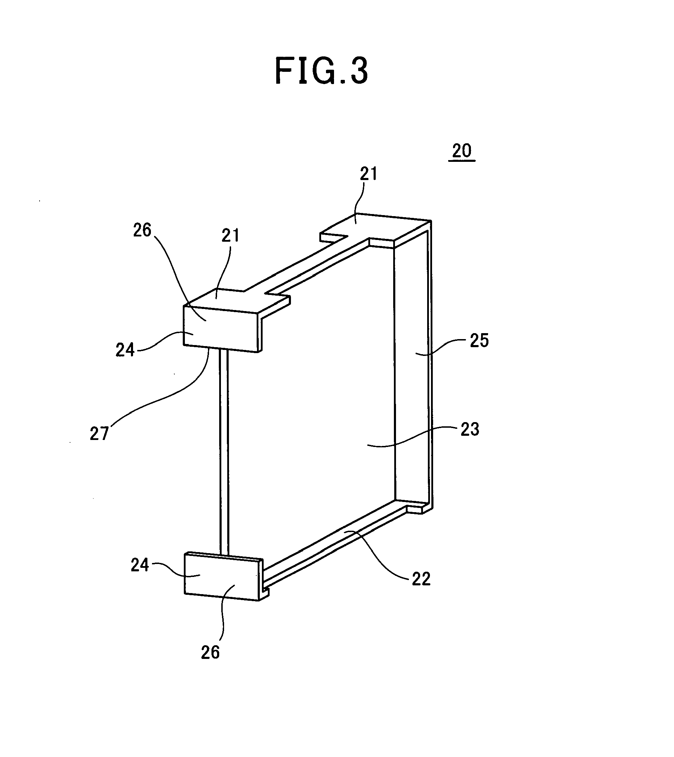

The separator 20 is a member for electrically insulating the adjacent electric cells 10 from each other, and formed of material having an insulating property. As shown in Fig. 3, when the electric cells 10 and the separators 20 are assembled to one another to construct the assembled battery 11, each separator 20 has an upper surface holding portion 21 for holding the upper surface 10b of the electric cell 10, a lower surface holding portion 22 for holding the lower surface of the electric cell 10, a flat plate type insulating portion 23 interposed between the adjacent electric cells 10, and side-surface holding portions 24 and 25 for holding the side surfaces of the electric cell 10. The side surface holding portion 24 are cut out in the up-and-down direction while a pair of corner portions 26 thereof are left, thereby forming a cut-out portion 27, and the cooling face 10A of the electric cell 10 is exposed through the cut-out portion 27. According to this construction, all the corner portions of the electric cell 10 which is formed to have a square (polygonal) flat-plate shape can be covered by the separator 20, and the insulation performance of the electric cells 10 can be kept even when the electric cell 10 is impacted from the external.

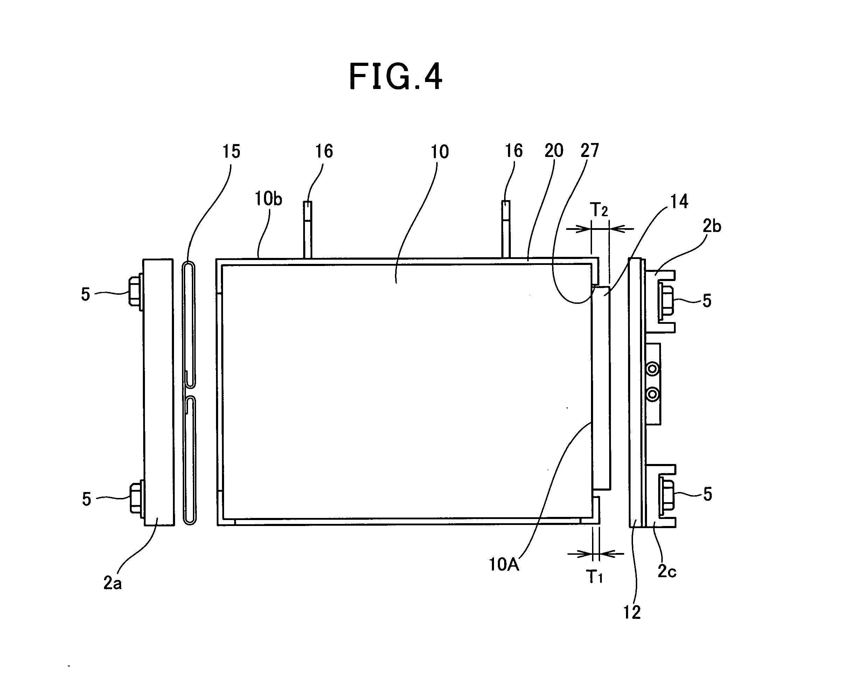

As shown in Fig. 4, a thermal conductive sheet 14 is brought into contact with the cooling face 10A of the electric cell 10 through the cut-out portion 27 of the separator 20. The thermal conductive sheet 14 is formed of material having excellent insulating property and thermal conductivity, has elasticity and the thickness T2 of the thermal conductive sheet 14 is set to be larger than the thickness T1 of the pair of corner portions 26 formed at the side surface holding portion 24 of the separator 20. Furthermore, it is known that the thermal conductive sheet 14 loses elasticity due to vibration occurring in connection with running of a vehicle or aging. When the thermal conductive sheet 14 loses elasticity, the thermal resistance between the cooling plate 12 and the cooling face 10A increases. Therefore, the thermal conductive sheet 14 is formed not to be thinner than the thickness T1 of the separator 20 even when the thermal conductivity sheet 14 loses elasticity.

According to this construction, the thermal conductive sheet 14 having excellent thermal conductivity can be brought into uniform and direct contact with the cooling face 10A and the cooling plate 12 of the exposed electric cell 10 through the cut-out portion 27 of the separator 20 even when the thermal conductive sheet 14 loses elasticity. Therefore, the thermal resistance between the cooling face 10A and the cooling plate 12 can be reduced.

Furthermore, in this construction, the thickness T2 of the thermal conductive sheet 14 is set to be larger than the thickness T1 of the pair of corner portions 26 formed at the side surface holding portion 24 of the separator 20, and the thermal conductive sheet 14 is crushed between the cooling plate 12 and the cooling face 11A of the assembled battery 11 so that the cooling plate 12 and the cooling face 11A of the assembled battery 11 are brought into uniform contact with each other. However, for example, the cooling plate 12 may be designed in a convex-shape so as to be fitted in the cut-out portion 27 of the separator 20 and come into contact with the cooling face 11A of the assembled battery 11, the surface of the cooling plate 12 may be subjected to an insulating treatment, and the cooling plate 12 the cooling face 10A of the electric cell 10 may be brought into contact with each other. According to this construction, the cooling plate 12 and the cooling face 10A of each electric cell 10 can be brought into uniform contact with each other through the thermal conductive sheet 14 with keeping the insulationperformancebetween the respective electric cells 10 irrespective of the thickness T2 of the thermal conductive sheet 14 (when the corner portions 26 of the separator 20 has the same thickness T1 or when T2 is smaller than T1). Or, the cooling plate 12 and the cooling face 10A of the electric cell 10 may be brought into contact with each other through no thermal conductive sheet 14.

The press device 15 is provided to the opposite face to the cooling face 10A of the electric cell 10 with which the thermal conductive sheet 14 is brought into contact. When the assembled battery 11 is pressed by the side blocks 2a, 2b, 2c from both the side surface sides, the assembled battery 11 is pressed against the cooling plate 12 by the press device 15, whereby the thermal conductive sheet 14 is crushed between the cooling plate 12 and the cooling face 11A of the assembled battery 11, and the cooling plate 12 is brought into uniform contact with the cooling face 11A of the assembled battery 11.

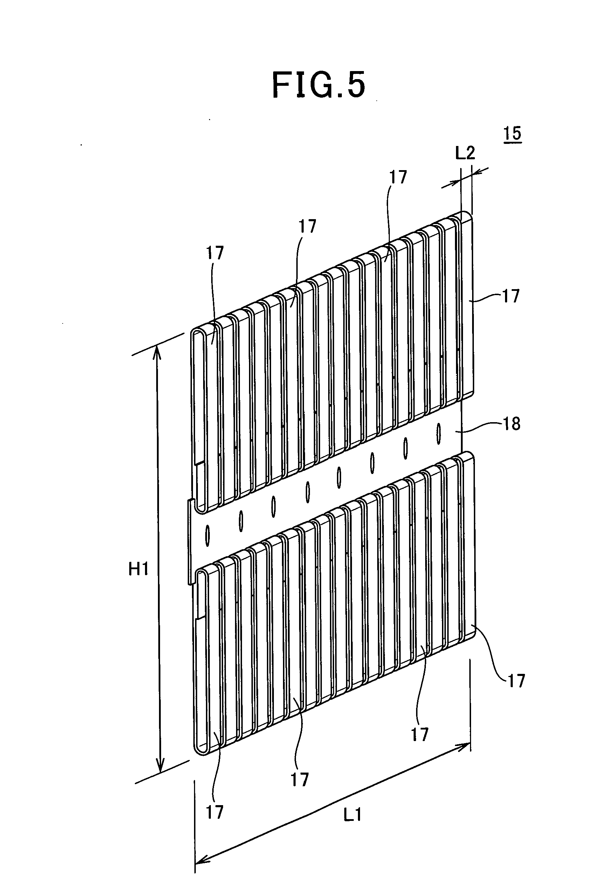

As shown in Fig. 5, the press device 15 has a support member 18 having a substantially rectangular flat-plate shape, and plural leaf spring (elastic members) 17 which are provided at both the edges in the short-side direction (in the vertical direction in Fig. 5) of the support member 18 so as to be arranged at predetermined intervals along the longitudinal direction (in the horizontal direction in Fig. 5)of the support member 18. The press device 15 is formed so that the height H1 thereof is substantially equal to the height of the side surfaces of the electric cells 10, and the length L1 thereof is substantially equal to the length in the arrangement direction of the assembled battery 11. According to this construction, the press device 15 can uniformly apply pressure along the side surface of the assembled battery 11 and urges the assembled battery 11 against the cooling plate 12.

The length L2 in the width direction of each leaf spring 17 is set to be substantially equal to the length in the short-side width direction of each electric cell 10. The interval between the respective adjacent leaf springs 17 arranged in the longitudinal direction of the support member 18 is set to be substantially equal to the thickness of the insulating portion 23 of the separator 20.

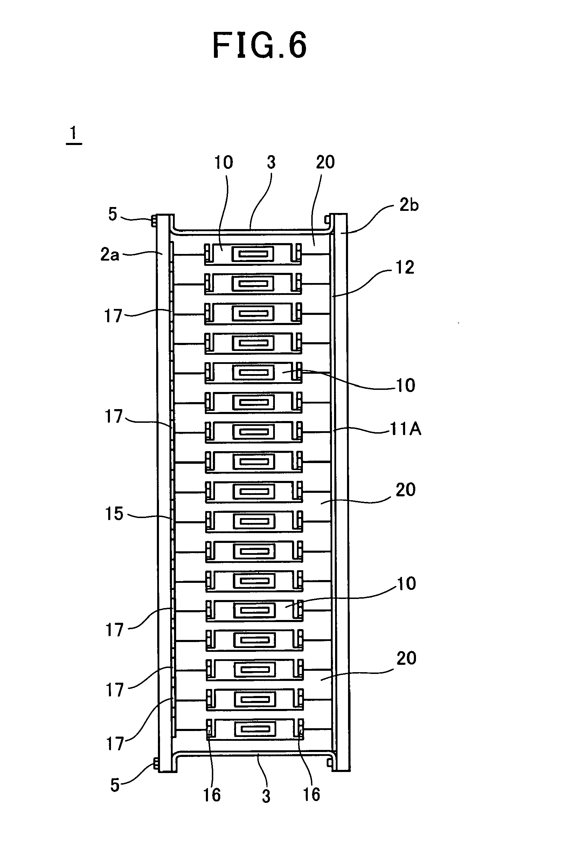

As shown in Fig. 6, the press device 15 is provided to urge the assembled battery 11 to the cooling plate 12 from the opposite face to the cooling face of the assembled battery 11 on which the cooling plate 11A is mounted, and the respective leaf springs 17 of the press device 15 can individually urge the respective electric cells 10 to the cooling plate 12 from the side surfaces of the electric cells 10. According to this construction, even when there is any individual difference in deformation amount due to thermal expansion or the like of each electric cell 10, each leaf spring 17 individually presses each electric cell to the cooling plate 12, whereby the cooing face 11A of the assembled battery 11 and the cooling plate 12 can be brought into uniform contact with the thermal conductive sheet 14.

the end blocks 3 of the battery module 1 are formed to be substantially U-shaped in section, and the distance between the confronting side surfaces thereof is set so that the press device 15 can urge the assembled battery 11 to the cooling plate 12 under the state that the press device 15 is pushed in by a predetermined amount when the side blocks 2a, 2b, 2c are threadably fitted to the side surfaces of the block ends 3 by bolts 5. The push-in amount of the press device 15 is added with the individual difference in deformation amount caused by deterioration of each electric cell 10 and variation of the thickness caused by reduction in elastic force of the thermal conductive sheet 14.

According to this construction, the push-in amount of each electric cell 10 by accumulated energy (urging energy) of each leaf spring 17 varies in accordance with the individual difference of the deformation amount caused by expansion or the like of each electric cell 10, whereby the cooling face 11A of the assembled battery 11 and the cooling plate can be brought into uniform contact with the thermal conduction sheet 14.

Furthermore, according to these constructions, the assembled battery 11 is pinched between the side block 2a and the side blocks 2b, 2c by the accumulated urging energy of the plural leaf springs 17 provided to the press device 15. Therefore, even when the assembled battery 11 suffers vibration or the like under vehicle running, the cooling face 11A of the assembled battery 11 can be kept in contact with the cooling plate 11 by the urging force which is applied in the lateral direction by the press device 15.

Next, a second embodiment will be described. In the following description, the same constituent elements as the first embodiment described above are represented by the same reference numerals, and the description thereof is omitted.

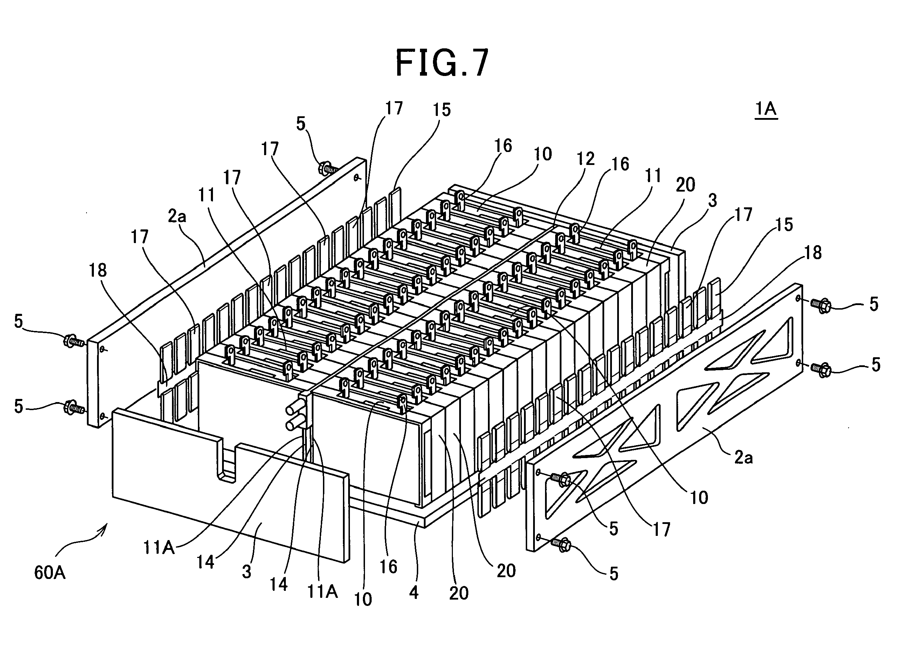

Fig. 7 shows a battery module 1A according to the second embodiment. As shown in Fig. 7, the battery module 1A according to this embodiment has a module case 60A, and two sets of assembled batteries 11 which are accommodated in the module case 60A and arranged at the right and left sides with respect to the arrangement direction of the electric cells 10. Cooling faces 11A are formed on the confronting side surfaces between the adjacent assembled batteries 11, and the cooing faces 11A are brought into contact with the cooling plates 12 through the respective thermal conductive sheets 14. The cooling plates 12 are pinched and held by the assembled batteries 11 arranged at both the sides of the cooling plates 12.

The press devices 15 are arranged on the opposite faces to the cooling faces 11A of the respective two sets of assembled batteries 11 arranged at the right and left sides with respect to the arrangement direction of the electric cells 10. The press devices 15 urge the assembled batteries 11 to the cooling plates 12, and the respective leaf springs 17 of the press devices 15 can individually urge the respective electric cells 10 to the cooling plates 12 from the side surfaces of the respective electric cells 10. Accordingly, the cooing face 10a of each electric cell 10 can be brought into contact with the cooling plates 12 through the thermal conductive sheet 14. Therefore, the cooing face 11A of the assembled battery 11 can be brought into uniform contact with the cooling plate through the thermal conductive sheet 14, and the thermal resistance between the cooling face 11A and the cooling plate 12 can be reduced.

The module case 60A has side blocks 2a, 2b which are disposed at the outside of the press devices 15 so as to be substantially in parallel to the respective press devices 15 and formed like a substantially rectangular plate. Furthermore, end blocks 3 are provided at the front and rear sides of the assembled batteries 11 with respect to the arrangement direction of the electric cells 10, and the side blocks 2a are threadably fixed to the side surfaces of the end blocks 3 by bolts 5. The module case 60 further has a bottom plate 4 on which the assembled batteries 11 are mounted.

According to this construction, the press devices 15 are pressed against the assembled batteries 11 by the side blocks 2a, and the thermal conductive sheets 14 interposed between the cooling faces 11A of the assembled batteries 11 and the cooling plate 12 are crushed. The thermal conductive sheets 14 are deformed while absorbing (copying) the surface shapes of the cooling plate 12 and the assembled batteries 11, and thus comes into uniform contact with them. Accordingly, the thermal resistance between the cooling plate 12 and the cooling faces 11A can be reduced, and the thus the battery modules 1A can be efficiently cooled.

Furthermore, the two sets of assembled batteries 11 arranged at the right and left sides with respect to the arrangement direction of the electric cells 10 are pinched by the accumulated urging energy of the plural leaf springs 17 provided to the press devices 15 disposed at both the sides of the assembled batteries 11. Therefore, even when the assembled batteries 11 suffer vibration or the like under vehicle running, the cooling faces 11A and the cooling plate 12 can be held in uniform contact with each other by using the urging force of the press devices 15.

Next, a third embodiment will be described. In the following description, the same constituent elements as the first and second embodiments are represented by the same reference numerals, and the description thereof is omitted.

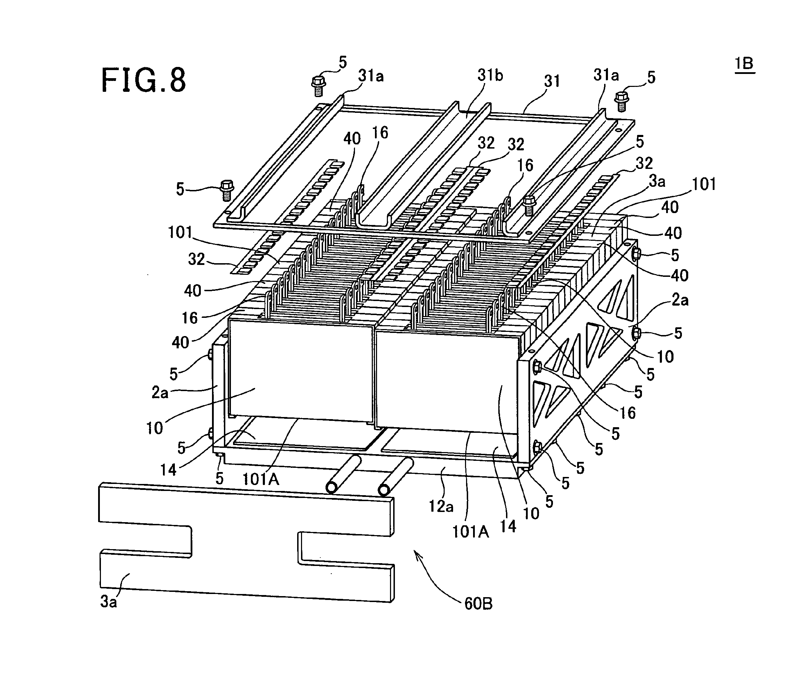

Fig. 8 shows a battery module 1B according to the third embodiment. As shown in Fig. 8, the battery module 1B has a module case 60B. In this module case 60B are accommodated two sets of assembled batteries 101 which are formed by arranging and assembling plural electric cells 10 and arranged side by side at the right and left sides with respect to the arrangement direction of the electric cells 10, a cooling plate 12a which is disposed along the bottom surfaces (cooling faces) 101A of the assembled batteries 101 and cools the assembled batteries 101, and thermal conductive sheets 14 interposed between the assembled batteries 101 and the cooling plate 12a. Plural press devices 32 for urging the assembled batteries 101 to the cooling plate 12a are provided on the upper surfaces 101b of the assembled batteries 110 which correspond to the opposite surfaces to the cooling faces 101A of the module case 60B. Apress frame 31 is provided at the upper side of the plural press devices 31 so as to be disposed substantially in parallel to the press devices 32.

The module case 60B of the battery module 1B has side blocks 2 which are provided at the outside of the assembled batteries 101 arranged side by side at the right and left sides with respect to the arrangement direction of the electric cells 10 so as to be disposed substantially in parallel to both the side surfaces of the assembled batteries 101, and end blocks 3a arranged at the front and rear sides of the assembledbatteries 101 with respect to the arrangement direction of the electric cells 10. The side blocks 2a are threadably fixed to the side surfaces of the end blocks 3a by bolts 5, and the module case 60B are formed in a substantially rectangular parallelepiped frame shape.

The press frame 31 disposed at the upper portion of the battery module 1B is threadably fixed to the upper surface of the side blocks 2a by bolts 5, and the cooling plate 12a is threadably fixed to the lower surfaces of the side blocks 2a from the lower side of the cooling plate 12a by bolts 5.

The plural press devices 32 are provided so as to press both the right and left ends of the assembled batteries 101 so that the respective electric cells 10 can be individually pressed. The press frame 31 is provided with a press member 31b for pressing a pair of press devices 32 arranged at the adjacent end portions of the adjacent assembled batteries 101 from the upper side, and press members 31a for pressing the press devices 32 arranged at the both end portions located at the outside of the assembled batteries 101 from the upper side.

Accordingly, the assembled batteries 101 can be brought into press-contact with and fixed to the cooling plate 12a by pressing the plural press devices 32 to the respective electric cells 10 from the upper side without suffering any force from the lateral side by the side blocks 2a or the end blocks 3a.

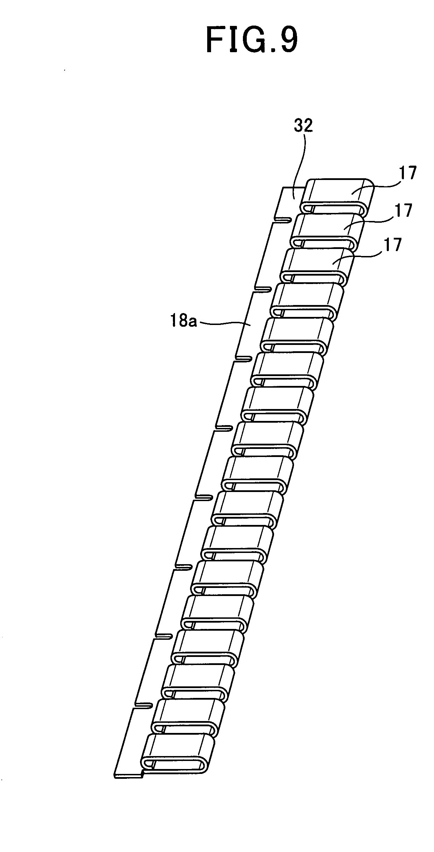

As shown in Fig. 9, the press devices 32 has a support member 18a designed like a substantially rectangular flat plate, and plural leaf springs (elastic members) 17 arranged at predetermined intervals in the longitudinal direction of the support member 18a. Each leaf spring 17 is provided so as to individually press each cell of the electric cell 10.

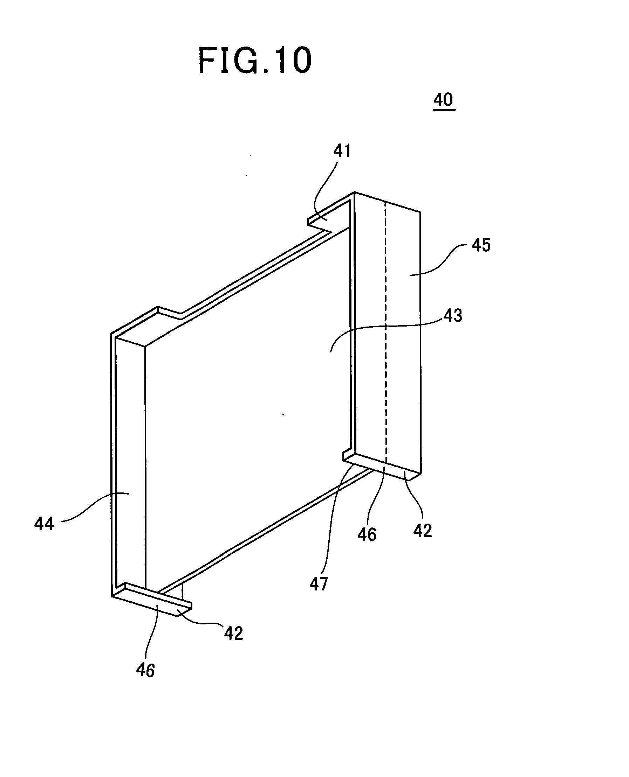

The assembled batteries 101 are constructed by arranging and assembling plural electric cells 10 in a predetermined direction so that separators 40 are interposed between the respective adjacent electric cells 10. The separator 40 is a member for electrically insulating the adjacent electric cells 10 from each other, and formed of a material having insulating property. As shown in Fig. 10, the separator 40 has an upper-surface holding portion 41 for holding the upper surface of the electric cell 10, a lower-surface holding portion 42 for holding the lower surface of the electric cell 10, a flat-plate-shaped insulating portion 43 interposed between the adjacent electric cells 10, and side-surface holding portions 44 and 45. The lower-surface holding portion 42 is cut out in the right-and-left direction with a pair of corner portions 46 thereof being left to form a cut-out portion 47, and the cooling face 101A of the assembled battery 101 is exposed through the cut-out portion 47. The thermal conductive sheet 14 is brought into contact with the cooling faces 101A of the assembled batteries 101 through the cut-out portions 47 as shown in Fig. 8.

According to this construction, the respective cells of the electric cells 10 are individually urged to the cooling plate 12a by using the accumulated urging energy of he plural leaf springs 17 provided to the press devices 32, whereby the assembled batteries 101 are held. Furthermore, the thermal conductive sheet 14 disposed between the cooling faces 101A of the assembled batteries 101 and the cooling plate 12a is crushed by the urging force of the press devices 32, whereby the thermal conductive sheet 14 absorbs (copies) the surface shapes of the cooling faces 101A and the cooling plate 12, whereby the thermal conductive sheet 12 can be brought into uniform contact with the cooling faces 101A and the cooling plate 12a.

As described above, according to the embodiments, the plural electric cells 10 are arranged in a predetermined direction and assembled while the separators are respective interposed between the respective adjacent electric cells 10, thereby forming the assembled batteries 11. The cooling plate 12 is brought into contact with the cooling faces 11A of the assembled batteries 11, and refrigerant is made to flow through the cooling plate 12. The assembled batteries 11 are urged to the cooling plate 12 by the press devices 15 so that the press force is applied to the whole surface of the opposite faces to the cooling faces 11A of the assembled batteries 11. Therefore, the cooling faces 11A of the assembledbatteries 11 are canbe brought into uniform contact with the cooling plate 12 under pressure. Furthermore, the assembled batteries are urged to the cooling plate by the press devices without urging the cooling plates. Therefore, the stress can be prevented from locally concentrating in such a case that the cooling plate 12 is urged to the assembled battery. Therefore, the cooling plate 12 can be prevented from being deformed due to external force under a normal use environment. Furthermore, the cooling face 11A and the cooling plate 12 can be kept in uniform contact with each other, and the thermal resistance between the cooling face 11A and the cooling plate 12 can be reduced, so that the battery module 1 can be efficiently cooled.

According to the above embodiments, the press devices 15 are configured to individually press each cell of the plural electric cells 10 constituting the assembled batteries 11. Therefore, even when there is an individual difference in deformation amount due to thermal expansion or the like of each electric cell, each electric cell 10 can be pressed so that the cooling face 11A of the assembled battery 11 and the cooling plate 12 can be brought into uniform contact with each other. Therefore, the thermal resistance between the cooling face 11A of the assembled battery 11 and the cooling plate 12 can be further reduced, and the battery module 1 can be efficiently cooled.

According to the above embodiments, the press device 15 comprises the support member 18 which is designed in a substantially rectangular planar shape, and the plural leaf springs 17 arranged at predetermined intervals in the longitudinal direction of the support member 18. Therefore, by using the accumulated urging energy of each leaf spring 17, each electric cell 10 can be urged to the cooling plate 12 in accordance with the individual difference in deformation amount due to thermal expansion or the like of each electric cell 10 so that the cooling face 11A of the assembled battery 11 and the cooling plate 12 are brought into uniform contact with each other through the thermal conductive sheet 14. Therefore, the press devices 15 for individually pressing the respective electric cells 10 are formed by a simple construction that the leaf springs 17 are arranged side by side at predetermined intervals, and urging force is applied to each electric cell 10 so that the cooling face 11A of the assembled battery 11 and the cooling plate 12 are brought into contact with each other, thereby reducing the thermal resistance, so that the cooling efficiency of the battery module 1 can be enhanced.

Furthermore, according to the above embodiments, when the electric cells 10 an the separators 20 are combined to form the assembled battery 11, the separator 20 has the upper-surface holding portion 21 for holding the upper surface 10a of the electric cell 10, the lower-surface holding portion 22 for holding the lower surface of the electric cell 10, the flat-plate type insulatingportion 23 interposed between the adjacent electric cells 10, and the side-surface holding portions 24, 25 for holding the right and left side surfaces of the electric cell 10. The holding portion for the surface on which the cooling face 101A is formed is cut out to form the cut-out portion 27 so that the pair of corner portions 26 are left and the cooling face 13 is exposed, and the cooling face 13 of the assembled battery 11 is exposed through the cut-out portion 27. According to this construction, the cooling face 10A of each electric cell 10 and the cooling plate 12 can be brought into contact with each other without interposing any separator 20 between the cooling face 10A and the cooling plate 12. Therefore, the cooling face 10A and the cooling plate 12 can be heat-exchanged with each other efficiently, and the cooling efficiency of the battery module 1 can be enhanced.

According to the above embodiments, the thermal conductive sheet 14 having excellent thermal conductivity and insulating property is interposed between the cooling face 10A of the electric cell 10 and the cooling plate 12. Therefore, the cooling face 10A and the cooling plate 12 are evenly brought into uniform contact with each other and efficiently heat-exchanged with each other, so that the cooling efficiency of the battery module 1 can be enhanced.

Furthermore, according to the above embodiments, the thermal conductive sheet 14 having a larger thickness than the corner portions 26 of the separator 20 is interposed between both the surfaces of the cooling plate 12, the cooling plate 12 is pinched from both the sides thereof by the assembled batteries 11, and the pressure is applied from both the sides of the assembled batteries 11 arranged at the right and left sides by the press devices 15 to fix the assembled batteries 11, thereby forming the battery module 1A. Therefore, the thermal conductive sheets 14 are pressed by the cooling plate 12 and the assembled batteries 11, and thus the thermal conductive sheets 14 can be evenly brought into uniform contact with the cooling faces 11A of the assembled batteries 11 and the cooling plate 12 . Accordingly, even when the plate is deformed at the fixing time of the cooling plate 12, even when there is an individual difference in deformation amount due to thermal expansion or the like of each electric cell 10 or even when the thermal conductive sheet loses elasticity due to vibration occurring under vehicle running or aging, the thermal loss between the cooling faces 11A of the assembled battery 11 and the cooling plate 12 can be reduced, and the heat-exchange can be efficiently performed. Accordingly, even in the construction that assembled batteries 11 are arranged side by side at the right and left sides and a larger amount of electric cells 10 are arranged to form a battery module having a large capacity, the cooling efficiency of the battery module 1A can be enhanced.

## Claims

1. A battery module(1, 1A, 1B) comprising:
at least one assembled battery (11, 101) that has a cooling face (11A, 101A) and comprises an assemble of a plurality of electric cells (10)and separators (20, 40)each of which has an insulating property and is interposed between adjacent electric cells of the plurality of electric cells;
a cooling plate (12, 12a) through which refrigerant is made to flow, the cooling plate being disposed in contact with the assembled battery;
a press device (15, 32) that is disposed to press the assembled battery from an opposite surface side of the assembled battery to the cooling face (11A, 101A) so that the cooling plate is brought into contact with the cooling face under pressure.

2. The battery module according to claim 1, wherein the press device presses each cell of the plural electric cells individually.

3. The battery module according to claim 1 or 2, wherein the press device has a plurality of leaf springs (17).

4. The battery module according to any one of claims 1 to 3. wherein each of the separators has an upper-surface holding portion (21, 41) for holding the upper surface of each of the electric cell, a side-surface holding portion (24, 25, 44, 45) for holding a pair of side surfaces of the electric cell, a lower-surface holding portion (22, 42) for holding the lower surface of the electric cell, and an insulating portion (23, 43) interposed between the adjacent electric cells, and the holding portion located at the cooling face is cut out to form a cut-out portion (27, 47) so that a pair of corner portions are left and the cooling face of the electric cell is exposed through the cut-out portion.

5. The battery module according to claim 4, further comprising a thermal conductive sheet (14) having an insulating property and thermal conductivity that is disposed in contact with the cooling face of each electric cell and the cooling plate.

6. The battery module according to any one of claims 1 to 5, wherein the cooling plate is pinched from both the sides thereof by the assembled battery through the thermal conductive sheet.
